(19) Europäisches Patentamt
European Patent Office
Office européen des brevets

(11) **EP 4 071 844 A1**

(12) **EUROPEAN PATENT APPLICATION**
published in accordance with Art. 153(4) EPC

(43) Date of publication:
**12.10.2022 Bulletin 2022/41**

(21) Application number: **20896164.9**

(22) Date of filing: **26.11.2020**

(51) International Patent Classification (IPC):
*H01M 4/02* (2006.01)   *H01M 4/04* (2006.01)
*H01M 4/13* (2010.01)   *H01M 4/139* (2010.01)

(52) Cooperative Patent Classification (CPC):
**H01M 4/02; H01M 4/04; H01M 4/13; H01M 4/139;**
**Y02E 60/10**

(86) International application number:
**PCT/JP2020/043976**

(87) International publication number:
**WO 2021/111968 (10.06.2021 Gazette 2021/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **03.12.2019   JP 2019218911**

(71) Applicant: **Envision AESC Japan Ltd.**
**Zama-shi, Kanagawa 252-0012 (JP)**

(72) Inventors:
  • **SHINOHARA Koichi**
  **Zama-shi, Kanagawa 252-0012 (JP)**

• **SHIRAISHI Shoichiro**
  **Zama-shi, Kanagawa 252-0012 (JP)**
• **SATO Moeko**
  **Zama-shi, Kanagawa 252-0012 (JP)**
• **SAITOU Mikiya**
  **Zama-shi, Kanagawa 252-0012 (JP)**
• **SATOU Yoshiki**
  **Zama-shi, Kanagawa 252-0012 (JP)**
• **KOYAMA Mayuko**
  **Zama-shi, Kanagawa 252-0012 (JP)**
• **SUZUKI Daisuke**
  **Sagamihara-shi, Kanagawa 252-0254 (JP)**

(74) Representative: **Dennemeyer & Associates S.A.**
**Postfach 70 04 25**
**81304 München (DE)**

(54) **POSITIVE ELECTRODE, LITHIUM ION SECONDARY BATTERY AND METHOD FOR PRODUCING POSITIVE ELECTRODE SHEET**

(57)    A positive electrode (100) includes a positive electrode current collector (110), a positive electrode mixture (120), and a mixture (130). The positive electrode current collector (110) has a first surface (112). The first surface (112) of the positive electrode current collector (110) includes a first region (112a), a second region (112b), and a third region (112c). The positive electrode (100) satisfies the following expression (1).

$$0 \leq L3/(L1 + L3) \leq 0.075 \quad (1)$$

Here, L1 is a length of the positive electrode (100) of the first region (112a) of the positive electrode (100) in one direction (first direction (X)), and L3 is a length of the third region (112c) of the positive electrode (100) in the one direction (first direction (X)).

FIG. 5

EP 4 071 844 A1

**Description**

TECHNICAL FIELD

The present invention relates to a positive electrode, a lithium ion secondary battery, and a method of manufacturing a positive electrode sheet.

BACKGROUND ART

A lithium ion secondary battery includes a positive electrode, a negative electrode, and a separator. The positive electrode of the lithium ion secondary battery includes a positive electrode current collector and a positive electrode mixture. The positive electrode current collector may have an end portion not covered by the positive electrode mixture. In order to prevent an occurrence of a short circuit between the end portion of the positive electrode current collector and the negative electrode, the end portion of the positive electrode current collector may be covered with an insulating layer (mixture).
Patent Document 1 discloses an example of a structure of a boundary between a positive electrode mixture and a mixture and the periphery of the boundary in the positive electrode. In this example, the thickness of the end portion of the positive electrode mixture gradually decreases from the inside toward the outside of the positive electrode mixture. The end portion of the positive electrode mixture is covered with the mixture. Patent Document 1 discloses that it is desirable that the width of the end portion of the positive electrode mixture is narrow from the viewpoint of increasing the capacity of the positive electrode.

RELATED DOCUMENT

PATENT DOCUMENT

[Patent Document 1] Japanese Unexamined Patent Publication No. 2012-114079

SUMMARY OF THE INVENTION

TECHNICAL PROBLEM

The present inventors have examined possible influence of the structure of the boundary between the positive electrode mixture and the mixture and the periphery of the boundary on the capacity of a lithium ion secondary battery. As a result, the present inventors have found a structure different from the structure disclosed in Patent Document 1 and may suppress a reduction in the capacity of the lithium ion secondary battery.
An example of an object of the present invention is to increase the capacity of a lithium ion secondary battery. Other objects of the invention will become apparent from the description herein.

SOLUTION TO PROBLEM

An aspect of the present invention is a positive electrode including a positive electrode current collector having a first surface, a positive electrode mixture located over the first surface of the positive electrode current collector, the positive electrode mixture containing a positive electrode active material, and a mixture located over the first surface of the positive electrode current collector, the mixture having a composition different from a composition of the positive electrode mixture, in which an electron transfer resistance value of the mixture in a thickness direction is higher than an electron transfer resistance value of the positive electrode mixture in the thickness direction. The first surface of the positive electrode current collector includes a first region over which the positive electrode mixture is present at a ratio of 99 parts by mass or more with respect to 100 parts by mass of total mass of the positive electrode mixture and the mixture, and a second region aligned with the first region in one direction along the first surface of the positive electrode current collector, in which the mixture is present at a ratio of 99 parts by mass or more with respect to 100 parts by mass of the total mass of the positive electrode mixture and the mixture over the second region. The following expression (1) is satisfied.

$$0 \le L3/(L1 + L3) \le 0.075 \ (1)$$

Here, L1 is a length of the first region of the positive electrode current collector in the one direction, and L3 is a length of a third region in the one direction, the third region being located between the first region and the second region of the positive electrode current collector, in which each of the positive electrode mixture and the mixture is present at a ratio of more than 1.0 part by mass with respect to 100 parts by mass of the total mass of the positive electrode mixture and the mixture over the third region.

Another aspect of the present invention is a positive electrode including a positive electrode current collector having a first surface, a positive electrode mixture located over the first surface of the positive electrode current collector, the positive electrode mixture containing a positive electrode active material, and a mixture located over the first surface of the positive electrode current collector, the mixture having a composition different from a composition of the positive electrode mixture, in which an electron transfer resistance value of the mixture in a thickness direction is higher than an electron transfer resistance value of the positive electrode mixture in the thickness direction. The first surface of the positive electrode current collector includes a first region over which the positive electrode mixture is present at a ratio of 99 parts by mass or more with respect to 100 parts by mass of total mass of the positive electrode mixture and the mixture, and a second region aligned with the first region in one direction along the first surface of the positive electrode current collector, in which the mixture is present at a ratio of 99 parts by mass or more with respect to 100 parts by mass of the total mass of the positive electrode mixture and the mixture over the second region. The following expression (2) is satisfied.

$$0 \leq L3 \leq 3.0 \text{ mm} \quad (2)$$

Here, L3 is a length of a third region in the one direction, the third region being located between the first region and the second region of the positive electrode current collector, in which each of the positive electrode mixture and the mixture is present at a ratio of more than 1.0 part by mass with respect to 100 parts by mass of the total mass of the positive electrode mixture and the mixture over the third region.

Still another aspect of the invention is a lithium ion secondary battery including the positive electrode according to the above aspects.

Still yet another aspect of the invention is a method of manufacturing a positive electrode sheet, the method including applying a first slurry and a second slurry onto a first surface of a positive electrode current collector sheet, the first slurry containing a positive electrode mixture containing a positive electrode active material, the second slurry containing a mixture having a composition different from a composition of the positive electrode mixture. The first slurry and the second slurry are applied onto the first surface such that the first slurry wetting and spreading along the first surface and the second slurry wetting and spreading along the first surface press against each other.

ADVANTAGEOUS EFFECTS OF INVENTION

According to the above-described aspects of the present invention, it is possible to increase the capacity of a lithium ion secondary battery.

BRIEF DESCRIPTION OF THE DRAWINGS

Fig. 1 is a top view of a lithium ion secondary battery according to an embodiment.
Fig. 2 is a diagram with a first lead, a second lead, and an exterior material removed from Fig. 1.
Fig. 3 is a cross-sectional view taken along line A-A' in Fig. 2.
Fig. 4 is a top view of a positive electrode illustrated in Fig. 3.
Fig. 5 is a cross-sectional view taken along line B-B' in Fig. 4.
Fig. 6 is a diagram for explaining an apparatus to manufacture a positive electrode sheet.
Fig. 7 is a diagram illustrating a tip of a discharge head illustrated in Fig. 6 and a periphery of the tip.
Fig. 8 is a plan view of a positive electrode current collector sheet onto which a first slurry and a second slurry are applied by the discharge head illustrated in Fig. 6.
Fig. 9 is a cross-sectional view taken along line C-C' in Fig. 8.
Fig. 10 is a plan view of the positive electrode current collector sheet in which the first slurry and the second slurry are dried by a dryer illustrated in Fig. 6 and are formed into a positive electrode mixture and a mixture, respectively.

DESCRIPTION OF EMBODIMENTS

Hereinafter, an embodiment of the present invention will be described with reference to the drawings. In all drawings, similar components are denoted by the similar reference signs, and description thereof will not be repeated.

In the present specification, ordinal numbers such as "first", "second", and "third" are added to simply distinguishing components having similar names unless otherwise specified, and do not mean the particular feature of the component (for example, order or importance).

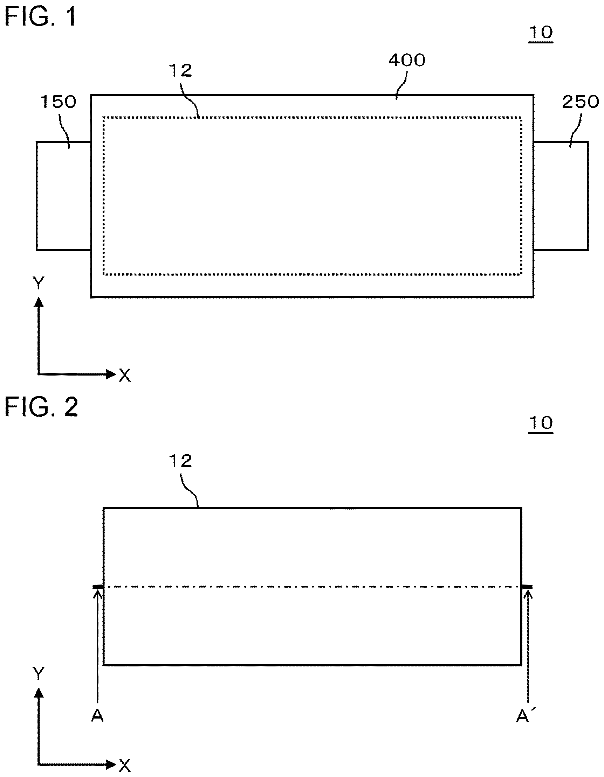

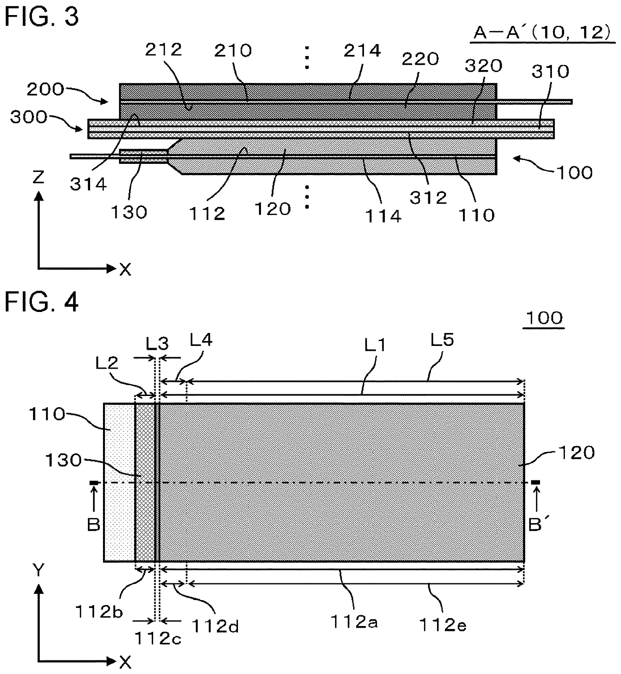

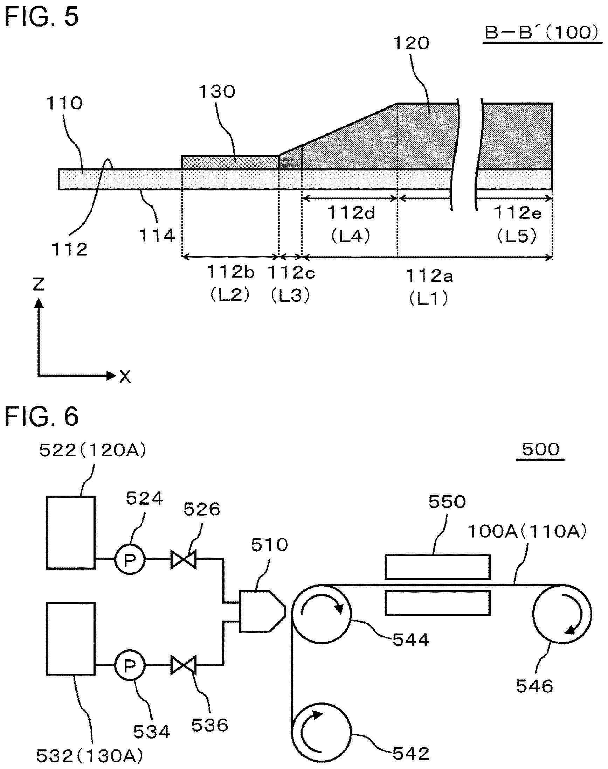

Fig. 1 is a top view of a lithium ion secondary battery 10 according to an embodiment. Fig. 2 is a diagram with a first lead 150, a second lead 250, and an exterior material 400 removed from Fig. 1. In other words, Fig. 2 is a top view of a stack 12. Fig. 3 is a cross-sectional view taken along line A-A' in Fig. 2. Fig. 4 is a top view of a positive electrode 100 illustrated in Fig. 3. Fig. 5 is a cross-sectional view taken along line B-B' in Fig. 4. Fig. 5 does not illustrate a positive electrode mixture 120 and a mixture 130 (for example, Fig. 3) on a second surface 114 side of a positive electrode current collector 110 for the description.

In Figs. 1 to 5, a first direction X indicates a length direction of the lithium ion secondary battery 10 (stack 12). A positive direction of the first direction X (direction indicated by an arrow indicating the first direction X) refers to a direction from the first lead 150 toward the second lead 250. A positive direction of the first direction X (direction opposite to the direction indicated by the arrow indicating the first direction X) refers to a direction from the second lead 250 toward the first lead 150. A second direction Y indicates a width direction of the lithium ion secondary battery 10 (stack 12). A positive direction of the second direction Y (direction indicated by an arrow indicating the second direction Y) refers to a left direction of the lithium ion secondary battery 10 (stack 12) when the lithium ion secondary battery 10 is viewed from the negative direction of the first direction X. A negative direction of the second direction Y (direction opposite to the direction indicated by the arrow indicating the second direction Y) refers to a right direction of the lithium ion secondary battery 10 (stack 12) when the lithium ion secondary battery 10 is viewed from the negative direction of the first direction X. A third direction Z indicates a thickness (height) direction of the lithium ion secondary battery 10 (stack 12). A positive direction of the third direction Z (direction indicated by an arrow indicating the third direction Z) refers to an upward direction of the lithium ion secondary battery 10 (stack 12). A negative direction of the third direction Z (direction opposite to the direction indicated by the arrow indicating the third direction Z) refers to a downward direction of the lithium ion secondary battery 10 (stack 12).

An outline of the positive electrode 100 according to the present embodiment will be described with reference to Fig. 5. The positive electrode 100 includes the positive electrode current collector 110, the positive electrode mixture 120, and the mixture 130. The positive electrode current collector 110 has a first surface 112. The positive electrode mixture 120 is located over the first surface 112 of the positive electrode current collector 110. The positive electrode mixture 120 contains a positive electrode active material. The mixture 130 is located over the first surface 112 of the positive electrode current collector 110. The mixture 130 has a composition different from the composition of the positive electrode mixture 120. The electron transfer resistance value of the mixture 130 in the thickness direction (third direction Z) is higher than the electron transfer resistance value of the positive electrode mixture 120 in the thickness direction (third direction Z). The first surface 112 of the positive electrode current collector 110 includes a first region 112a, a second region 112b, and a third region 112c. Over the first region 112a, the positive electrode mixture 120 is present at a ratio of 99 parts by mass or more with respect to 100 parts by mass of the total mass of the positive electrode mixture 120 and the mixture 130 (total mass of the positive electrode mixture 120 and the mixture 130 over the first region 112a). The second region 112b is aligned with the first region 112a in one direction (first direction X) along the first surface 112 of the positive electrode current collector 110. Over the second region 112b, the mixture 130 is present at a ratio of 99 parts by mass or more with respect to 100 parts by mass of the total mass of the positive electrode mixture 120 and the mixture 130 (total mass of the positive electrode mixture 120 and the mixture 130 over the second region 112b). The third region 112c is located between the first region 112a and the second region 112b. Over the third region 112c, each of the positive electrode mixture 120 and the mixture 130 is present at a ratio of more than 1.0 part by mass with respect to 100 parts by mass of the total mass of the positive electrode mixture 120 and the mixture 130 (the total mass of the positive electrode mixture 120 and the mixture 130 over the third region 112c). The positive electrode 100 satisfies at least one of the following expressions (1) and (2), preferably satisfies at least one of the following expressions (3) and (4).

$$0 \leq L3/(L1 + L3) \leq 0.075 \quad (1)$$

$$0 \leq L3 \leq 3.0 \text{ mm} \quad (2)$$

$$0 \leq L3/(L1 + L3) \leq 0.033 \quad (3)$$

$$0 \leq L3 \leq 1.3 \text{ mm} \quad (4)$$

Here, L1 is the length of the first region 112a of the positive electrode 100 in the one direction (first direction X), and L3 is the length of the third region 112c of the positive electrode 100 in the one direction (first direction X). As represented by the expressions (1) to (4), the positive electrode 100 may satisfy L3 = 0. That is, the first surface 112 may not include the third region 112c, and the first region 112a and the second region 112b may be in contact with each other without through the third region 112c.

The inventors of the present application have found that the shorter L3 suppresses the reduction in the capacity of the lithium ion secondary battery 10. More specifically, the inventors of the present application have found that the reduction in the capacity of the lithium ion secondary battery 10 is suppressed when at least one of the expressions (1) and (2), preferably at least one of the expressions (3) and (4), is satisfied.

The respective ratios of the positive electrode mixture 120 and the mixture 130 over each of the first region 112a, the second region 112b, and the third region 112c can be determined, for example, by elemental distribution mapping obtained in a manner that the positive electrode 100 is hardened with a resin, the positive electrode 100 hardened with the resin is cut along the first direction X, and the cross section of the positive electrode 100 perpendicular to the second direction Y is analyzed by energy dispersive X-ray analysis (EDX).

The lithium ion secondary battery 10 is described with reference to Figs. 1 and 2.

The lithium ion secondary battery 10 includes the stack 12, the first lead 150, the second lead 250, and the exterior material 400.

The first lead 150 is electrically connected to the positive electrode 100 (for example, Fig. 3). The first lead 150 may be formed of, for example, aluminum or an aluminum alloy.

The second lead 250 is electrically connected to a negative electrode 200 (for example, Fig. 3). The second lead 250 may be formed of, for example, copper or a copper alloy or a nickelplated article thereof.

The exterior material 400 has a rectangular shape having four sides. In the present embodiment, the first lead 150 is provided on the side of the exterior material 400 located on the negative direction side of the first direction X, and the second lead 250 is provided on the side of the exterior material 400 located on the positive direction side of the first direction X. The first lead 150 and the second lead 250 may be provided on the common side of the exterior material 400 (for example, the side located on the positive direction side or the negative direction side of the first direction X).

The exterior material 400 accommodates the stack 12 together with an electrolytic solution (not illustrated).

The exterior material 400 may include, for example, a heat-sealable resin layer and a barrier layer, and may be, for example, a laminate film including a heat-sealable resin layer and a barrier layer.

Examples of a resin material to form the heat-sealable resin layer may include, for example, polyethylene (PE), polypropylene, nylon, polyethylene terephthalate (PET) or the like. The thickness of the heat-sealable resin layer is, for example, equal to or more than 20 $\mu$m and equal to or less than 200 $\mu$m.

The barrier layer has a barrier property such as prevention of leakage of an electrolytic solution or invasion of moisture from the outside. Examples of the barrier layer may include a barrier layer formed of metal, such as stainless steel (SUS) foil, aluminum foil, aluminum alloy foil, copper foil, and titanium foil. The thickness of the barrier layer is, for example, equal to or more than 10 $\mu$m and equal to or less than 100 $\mu$m.

The heat-sealable resin layer of the laminate film may be one layer or two or more layers. Similarly, the barrier layer of the laminate film may be one layer or two or more layers.

The electrolytic solution is, for example, a non-aqueous electrolytic solution. The non-aqueous electrolytic solution may contain a lithium salt and a solvent for dissolving the lithium salt.

Examples of the lithium salt may include $LiClO_4$, $LiBF_6$, $LiPF_6$, $LiCF_3SO_3$, $LiCF_3CO_2$, $LiAsF_6$, $LiSbF_6$, $LiB_{10}Cl_{10}$, $LiAlCl_4$, $LiCl$, $LiBr$, $LiB(C_2H_5)_4$, $CF_3SO_3Li$, $CH_3SO_3Li$, $LiC_4F_9SO_3$, $Li(CF_3SO_2)_2N$, lower fatty acid lithium carboxylate, and the like.

Examples of the solvent for dissolving the lithium salt may include: carbonates such as ethylene carbonate (EC), propylene carbonate (PC), butylene carbonate (BC), dimethyl carbonate (DMC), ethyl methyl carbonate (EMC), diethyl carbonate (DEC), methyl ethyl carbonate (MEC), and vinylene carbonate (VC); lactones such as $\gamma$-butyrolactone and $\gamma$-valerolactone; ethers such as trimethoxymethane, 1,2-dimethoxyethane, diethyl ether, tetrahydrofuran, and 2-methyltetraoxide; sulfoxides such as dimethyl sulfoxide; oxolanes such as 1,3-dioxolane and 4-methyl-1,3-dioxolane; nitrogen-containing solvents such as acetonitrile, nitromethane, formamide, and dimethylformamide; organic acid esters such as methyl formate, methyl acetate, ethyl acetate, butyl acetate, methyl propionate, and ethyl propionate; phosphate triesters and diglimes; triglimes; sulfolanes such as sulfolanes and methyl sulfolanes; oxazolidinones such as 3-methyl-2-oxazolidinone; and sultones such as 1,3-propane sultone, 1,4-butane sultone, and nafta sultone. These substances may be used singly or in combination.

The stack 12 is described with reference to Fig. 3.

The stack 12 includes a plurality of positive electrodes 100, a plurality of negative electrodes 200, and a plurality of separators 300. The positive electrodes 100 and the negative electrodes 200 are alternately stacked in the third direction Z. Each separator 300 is located between the positive electrode 100 and the negative electrode 200 adjacent to each other in the third direction Z. The stack 12 may include only one positive electrode 100, only one negative electrode 200, and only one separator 300. Alternatively, the separator 300 may be stretched in a zigzag manner to pass between the positive electrode 100 and the negative electrode 200 adjacent to each other while being folded along the first direction X on the outside of the positive electrode 100 or the negative electrode 200 in the first direction X.

The details of the positive electrode 100 is described. The positive electrode 100 includes the positive electrode current collector 110, the positive electrode mixture 120, and the mixture 130.

The positive electrode current collector 110 of the positive electrode 100 has the first surface 112 and the second surface 114. The first surface 112 of the positive electrode current collector 110 is the upper surface of the positive electrode current collector 110. The second surface 114 of the positive electrode current collector 110 is opposite to the first surface 112 of the positive electrode current collector 110, and is the lower surface of the positive electrode current collector 110.

The positive electrode mixture 120 is located over the first surface 112 of the positive electrode current collector 110. Another positive electrode mixture 120 is located over the second surface 114 of the positive electrode current collector 110. The positive electrode mixture 120 may be located only over one of the first surface 112 and the second surface 114 of the positive electrode current collector 110.

The mixture 130 is located over the first surface 112 of the positive electrode current collector 110. The mixture 130 is adjacent to the positive electrode mixture 120 in the first direction X, and is in contact with an end portion of the positive electrode mixture 120 on the negative direction side of the first direction X. The mixture 130 overlaps (faces) a portion of a negative electrode mixture 220 (details will be described later) of the negative electrode 200 (end portion of the negative electrode mixture 220 on the negative direction side of the first direction X) in the third direction Z. Thus, it is possible to suppress the positive electrode current collector 110 from being in contact with the portion of the negative electrode mixture 220 (the end portion of the negative electrode mixture 220 on the negative direction side of the first direction X) to cause a short circuit.

The end portion of the positive electrode current collector 110 on the negative direction side of the first direction X is connected to the first lead 150 (Fig. 1). For example, when the end portion of the positive electrode current collector 110 on the negative direction side of the first direction X and the first lead 150 are misaligned in the third direction Z, the end portion of the positive electrode current collector 110 on the negative direction side of the first direction X may be bent toward the first lead 150.

The positive electrode current collector 110 may be formed of, for example, aluminum, stainless steel, nickel, titanium, or an alloy thereof. The shape of the positive electrode current collector 110 may be, for example, foil, a flat plate, or a mesh. The thickness of the positive electrode current collector 110 (third direction Z) is, for example, equal to or more than 1 $\mu$m and equal to or less than 50 $\mu$m.

The positive electrode mixture 120 contains a positive electrode active material, a binder resin, and a conductive aid.

The positive electrode active material is not particularly limited as far as it is a normal positive electrode active material that can be used for the positive electrode 100 of the lithium ion secondary battery 10. Examples of the positive electrode active material include: composite oxide of lithium and transition metal such as lithium-nickel composite oxide, lithium-cobalt composite oxide, lithium-manganese composite oxide, lithium-nickel-manganese composite oxide, lithium-nickel-cobalt composite oxide, lithium-nickel-aluminum composite oxide, lithium-nickel-cobalt-aluminum composite oxide, lithium-nickel-manganese-cobalt composite oxide, lithium-nickel-manganese-aluminum composite oxide, and lithium-nickel-cobalt-manganese-aluminum composite oxide; transition metal sulfides such as $TiS_2$, FeS, and $MoS_2$; and transition metal oxides such as MnO, $V_2O_5$, $V_6O_{13}$, and $TiO_2$, olivine-type lithium phosphorus oxides and the like. The olivine-type lithium phosphorus oxide contains, for example, at least one element in the group consisting of Mn, Cr, Co, Cu, Ni, V, Mo, Ti, Zn, Al, Ga, Mg, B, Nb, and Fe; lithium; phosphorus; and oxygen. Some elements of such compounds may be partially replaced with other elements to improve the properties thereof. Among the compounds, olivine-type lithium iron phosphorus oxide, lithium-nickel composite oxide, lithium-cobalt composite oxide, lithium-manganese composite oxide, lithium-nickel-manganese composite oxide, lithium-nickel-cobalt composite oxide, lithium-nickel-aluminum composite oxide, lithium-nickel-cobalt-aluminum composite oxide, lithium-nickel-manganese-cobalt composite oxide, lithium-nickel-manganese-aluminum composite oxide, lithium-nickel-cobalt-manganese-aluminum composite oxide are preferable. The positive electrode active materials have large capacity and large energy density in addition to a high working potential. The positive electrode active material may be used only alone or may be used in combination of two or more kinds thereof.

The positive electrode mixture 120 contains, for example, 90 parts by mass or more and 99 parts by mass or less of the positive electrode active material with respect to 100 parts by mass of the total mass of the positive electrode mixture 120.

The average particle size of the positive electrode active material contained in the positive electrode mixture 120 is preferably equal to or more than 1 $\mu$m, and more preferably equal to or more than 2 $\mu$m from the viewpoint of suppressing a side reaction during charging/discharging and suppressing a decrease in charging/discharging efficiency. The average particle size thereof is preferably equal to or less than 100 $\mu$m and more preferably equal to or less than

50 μm from the viewpoint of input/output characteristics and manufacturing of the positive electrode 100 (smoothness of the surface of the positive electrode 100 and the like). Here, the average particle size means a particle size (median diameter: D50) at an integrated value of 50% in particle size distribution (volume basis) by a laser diffraction/scattering method.

The density of the positive electrode mixture 120 is, for example, equal to or more than 2.0 g/cm³ and equal to or less than 4.0 g/cm³.

The thickness (third direction Z) of the positive electrode mixture 120 over one of both the surfaces (first surface 112 and second surface 114) of the positive electrode current collector 110 in a fifth region 112e described later can be appropriately determined. The thickness is, for example, equal to or less than 60 μm.

The total thickness (third direction Z) of the positive electrode mixture 120 over both the surfaces (first surface 112 and second surface 114) of the positive electrode current collector 110 in a fifth region 112e described later can be appropriately determined. The thickness is, for example, equal to or less than 120 μm.

The binder resin contained in the positive electrode mixture 120 is, for example, polytetrafluoroethylene (PTFE) or polyvinylidene fluoride (PVDF).

The amount of the binder resin contained in the positive electrode mixture 120 can be appropriately determined. The positive electrode mixture 120 contains, for example, 0.1 part by mass or more and 10.0 parts by mass or less of the binder resin with respect to 100 parts by mass of the total mass of the positive electrode mixture 120.

The conductive aid contained in the positive electrode mixture 120 is, for example, carbon black, ketjen black, acetylene black, natural graphite, artificial graphite, carbon fiber, or the like. The graphite may be, for example, flake graphite or spheroidal graphite. These substances may be used alone or in combination.

The amount of the conductive aid contained in the positive electrode mixture 120 can be appropriately determined. The positive electrode mixture 120 contains, for example, 0.1 part by mass or more and 8.0 parts by mass or less of the conductive aid with respect to 100 parts by mass of the total mass of the positive electrode mixture 120.

The positive electrode mixture 120 may appropriately contain a pH adjuster (for example, oxalic acid) for neutralizing an alkaline component contained in the positive electrode active material for the purpose of preventing gelation of slurry.

The mixture 130 has a composition different from the composition of the positive electrode mixture 120. The electron transfer resistance value of the mixture 130 in the thickness direction (third direction Z) is higher than the electron transfer resistance value of the positive electrode mixture 120 in the thickness direction (third direction Z). The mixture 130 is, for example, an insulating layer.

The mixture 130 contains, for example, at least one selected from the group consisting of aluminum oxide, aluminum hydroxide, magnesium oxide, titanium oxide, zirconium oxide, and silicic acid. The mixture 130 preferably contains, for example, α-alumina.

More specifically, the mixture 130 contains insulating particles (for example, at least one of inorganic particles and organic particles) and a binder.

The material of the insulating particles contained in the mixture 130 is at least one selected from the group consisting of, for example, aluminum oxide (for example, α-alumina), aluminum hydroxide, magnesium oxide, titanium oxide, zirconium oxide, silicic acid, thermoplastic resins, ionizing radiation curable resins, thermosetting resins, and insulating inks.

The amount of insulating particles contained in the mixture 130 can be appropriately determined. The mixture 130 contains, for example, 80 parts by mass or more and 97 parts by mass or less of insulating particles with respect to 100 parts by mass of the total mass of the mixture 130.

The average particle size of the insulating particles contained in the mixture 130 is, for example, equal to or more than 0.1 μm and equal to or less than 3.0 μm. The ratios of the insulating particles having a particle size of 0.2 μm or less and the insulating particles having a particle size of 2 μm or more are preferably equal to or less than 10% by volume with respect to the total volume of the insulating particles.

The binder contained in the mixture 130 is, for example, polyvinylidene fluoride (PVDF), potetrafluoroethylene (PTEF), polyimide, or polyamide.

The amount of the binder contained in the mixture 130 can be appropriately determined. The mixture 130 contains, for example, 0.5 parts by mass or more and 60 parts by mass or less of the binder with respect to 100 parts by mass of the total mass of the mixture 130.

The thickness (third direction Z) of the mixture 130 over one of both the surfaces (first surface 112 and second surface 114) of the positive electrode current collector 110 may be thinner than a thickness of the positive electrode mixture 120 over one surface of both the surfaces (first surface 112 and second surface 114) of the positive electrode current collector 110 in the fifth region 112e described later, and may be, for example, equal to or less than 90% of the thickness (third direction Z) of the positive electrode mixture 120 over one of both the surfaces (first surface 112 and second surface 114) of the positive electrode current collector 110 in the fifth region 112e. The thickness (third direction Z) of the mixture 130 over one surface of both the surfaces (first surface 112 and second surface 114) of the positive electrode current collector 110 may be equal to or more than, for example, 3 $\mu$m.

The total thickness (third direction Z) of the mixture 130 over both the surfaces of the positive electrode current collector 110 may be thinner than the total thickness (third direction Z) of the positive electrode mixture 120 over both the surfaces of the positive electrode current collector 110 in the fifth region 112e described later, and may be, for example, equal to or less than 90% of the total thickness (third direction Z) of the positive electrode mixture 120 over both the surfaces of the positive electrode current collector 110 in the fifth region 112e. The total thickness (third direction Z) of the mixture 130 on both the surfaces of the positive electrode current collector 110 may be equal to or more than, for example, 6 $\mu$m.

The details of the negative electrode 200 is described. The negative electrode 200 has a negative electrode current collector 210 and the negative electrode mixture 220.

The negative electrode current collector 210 of the negative electrode 200 has a third surface 212 and a fourth surface 214. The third surface 212 of the negative electrode current collector 210 is the lower surface of the negative electrode current collector 210. The fourth surface 214 of the negative electrode current collector 210 is opposite to the third surface 212 of the negative electrode current collector 210, and is the upper surface of the negative electrode current collector 210.

The negative electrode mixture 220 is located over the third surface 212 of the negative electrode current collector 210. Another negative electrode mixture 220 is located over the fourth surface 214 of the negative electrode current collector 210. The negative electrode mixture 220 may be located only over one of the third surface 212 and the fourth surface 214 of the negative electrode current collector 210.

The end portion of the negative electrode current collector 210 on the positive direction side of the first direction X is connected to the second lead 250 (Fig. 1). For example, when the end portion of the negative electrode current collector 210 on the positive direction side of the first direction X and the second lead 250 are misaligned in the third direction Z, the end portion of the negative electrode current collector 210 on the positive direction side of the first direction X may be bent toward the second lead 250.

The negative electrode current collector 210 may be formed of, for example, copper, stainless steel, nickel, titanium, or an alloy thereof. The shape of the negative electrode current collector 210 may be, for example, foil, a flat plate, or a mesh. The thickness of the negative electrode current collector 210 in the third direction Z (third direction Z) is, for example, equal to or more than 1 $\mu$m and equal to or less than 50 $\mu$m.

The negative electrode mixture 220 contains a negative electrode active material and a binder resin. The negative electrode mixture 220 may further contain a conductive aid, if necessary.

The negative electrode active material is not particularly limited as far as it is a normal negative electrode active material that can be used for the negative electrode 200 of the lithium ion secondary battery 10. Examples of the negative electrode active material include: carbon materials such as graphite, amorphous carbon, diamond-like carbon, fullerene, carbon nanotubes, and carbon nanohorns that store lithium; lithium-based metal materials such as lithium metal and lithium alloys; Si-based materials such as Si, $SiO_2$, $SiO_x$ ($0 < x \leq 2$), and Si-containing composite materials; and conductive polymer materials such as polyacene, polyacetylene, and polypyrrole. Among the materials, carbon materials are preferable, and graphite materials such as natural graphite and artificial graphite are particularly preferable. The negative electrode active material may be used alone or used in combination of two or more kinds thereof.

The negative electrode mixture 220 contains, for example, 90 parts by mass or more and 99 parts by mass or less of the negative electrode active material with respect to 100 parts by mass of the total mass of the negative electrode mixture 220.

The average particle size of the negative electrode active material is preferably equal to or more than 1 $\mu$m, and more preferably equal to or more than 2 $\mu$m from the viewpoint of suppressing a side reaction during charging/discharging and suppressing a decrease in charging/discharging efficiency. The average particle size thereof is preferably equal to or less than 100 $\mu$m and more preferably equal to or less than 50 $\mu$m from the viewpoint of input/output characteristics and manufacturing of the negative electrode 200 (smoothness of the surface of the negative electrode 200 and the like). Here, the average particle size means a particle size (median diameter: D50) at an integrated value of 50% in particle size distribution (volume basis) by a laser diffraction/scattering method.

The density of the negative electrode mixture 220 is, for example, equal to or more than 1.2 $g/cm^3$ and equal to or less than 2.0 $g/cm^3$.

The thickness (third direction Z) of the negative electrode mixture 220 over one of both the surfaces (third surface 212 and fourth surface 214) of the negative electrode current collector 210 can be appropriately determined. The thickness is, for example, equal to or less than 80 $\mu$m.

The total thickness (third direction Z) of the negative electrode mixture 220 over both the surfaces (third surface 212 and fourth surface 214) of the negative electrode current collector 210 can be appropriately determined. The thickness is, for example, equal to or less than 160 $\mu$m.

When an organic solvent is used as a solvent for obtaining the slurry, the binder resin contained in the negative electrode mixture 220 may be, for example, a binder resin such as polyvinylidene fluoride (PVDF). When water is used as the solvent for obtaining the slurry, the binder resin contained in the negative electrode mixture 220 may be, for example, a rubber-based binder (for example, styrene-butadiene rubber (SBR)) or an acrylic-based binder resin. Such an aqueous binder resin may be in the form of an emulsion. When water is used as the solvent, it is preferable to use an aqueous binder and a thickener such as carboxymethyl cellulose (CMC) in combination.

The amount of the binder resin contained in the negative electrode mixture 220 can be appropriately determined. The negative electrode mixture 220 contains, for example, 0.1 part by mass or more and 10.0 parts by mass or less of the binder resin with respect to 100 parts by mass of the total mass of the negative electrode mixture 220.

The details of the separator 300 is described. The separator 300 includes a base material 310 and an insulating layer 320. The separator 300 does not have to have the insulating layer 320.

The base material 310 of the separator 300 has a fifth surface 312 and a sixth surface 314. The fifth surface 312 of the base material 310 is the lower surface of the base material 310. The fifth surface 312 of the base material 310 faces the positive electrode 100. The sixth surface 314 of the base material 310 is opposite to the fifth surface 312 of the base material 310 and is the upper surface of the base material 310. The sixth surface 314 of the base material 310 faces the negative electrode 200.

The insulating layer 320 is located over the fifth surface 312 of the base material 310. Another insulating layer 320 is located over the sixth surface 314 of the base material 310.

The separator 300 has a function of electrically insulating the positive electrode 100 and the negative electrode 200 from each other and allowing ions (for example, lithium ions) to pass therethrough. For example, a porous separator may be used as the separator 300.

The shape of the separator 300 can be appropriately determined in accordance with the shape of the positive electrode 100 or the negative electrode 200, and may be, for example, a rectangle.

The base material 310 includes a porous resin layer containing polyolefin as the main component. Specifically, the porous resin layer contains 50 parts by mass or more, preferably 70 parts by mass or more, and more preferably 90 parts by mass or more of polyolefin with respect to 100 parts by mass of the total mass of the porous resin layer, and may contain 100 parts by mass of polyolefin with respect to 100 parts by mass of the total mass of the porous resin layer. The porous resin layer may be a single layer or may be two or more types of layers. Examples of the polyolefin include polypropylene, polyethylene and the like.

The insulating layer 320 is, for example, a ceramic layer and contains an inorganic filler. The inorganic filler contained in the insulating layer 320 can be appropriately selected from known materials used for the separator 300 of the lithium ion secondary battery 10. For example, the inorganic filler is prepared in the form of particles of one or more kinds of inorganic compounds selected from boehmite, titanium oxide, alumina, silica, magnesia, zirconia, zinc oxide, iron oxide, ceria, yttria, and the like.

The thickness (third direction Z) of the base material 310 can be appropriately determined, and may be, for example, equal to or more than 5.0 μm and equal to or less than 25.0 μm.

The total thickness (third direction Z) of the insulating layer 320 on both the surfaces (fifth surface 312 and sixth surface 314) of the base material 310 can be appropriately determined, and may be, for example, equal to or more than 10.0 μm and equal to or less than 20.0 μm, and preferably equal to or more than 12.5 μm and equal to or less than 17.5 μm.

The thickness (third direction Z) of the separator 300 can be appropriately determined, and may be, for example, equal to or more than 15.0 μm and equal to or less than 45.0 μm.

The details of the positive electrode 100 is described with reference to Figs. 4 and 5.

The first region 112a, the third region 112c, and the second region 112b of the first surface 112 of the positive electrode current collector 110 are arranged in this order from the negative direction of the first direction X to the positive direction of the first direction X.

Substantially only the positive electrode mixture 120 of the positive electrode mixture 120 and the mixture 130 is present over the first region 112a. In other words, over the first region 112a, the positive electrode mixture 120 is present at a ratio of the above-described parts by mass or more with respect to 100 parts by mass of the total mass of the positive electrode mixture 120 and the mixture 130 (total mass of the positive electrode mixture 120 and the mixture 130 over the first region 112a).

Substantially only the mixture 130 of the positive electrode mixture 120 and the mixture 130 is present over the second region 112b. In other words, over the second region 112b, the mixture 130 is present at a ratio of the above-described parts by mass or more with respect to 100 parts by mass of the total mass of the positive electrode mixture 120 and the mixture 130 (total mass of the positive electrode mixture 120 and the mixture 130 over the second region 112b).

Substantially both the positive electrode mixture 120 and the mixture 130 are present over the third region 112c. In other words, over the third region 112c, each of the positive electrode mixture 120 and the mixture 130 is present at a ratio of more than the above-described parts by mass with respect to 100 parts by mass of the total mass of the positive electrode mixture 120 and the mixture 130 (the total mass of the positive electrode mixture 120 and the mixture 130 over the third region 112c).

The positive electrode mixture 120 over the first region 112a is a layer having a thickness along the third direction Z. The mixture 130 over the second region 112b is a layer having a thickness along the third direction Z. Each of the positive electrode mixture 120 and the mixture 130 over the third region 112c may be a layer having a thickness along the third direction Z, or may not be a layer.

The length of the first region 112a in the first direction X may be substantially constant regardless of the position in the second direction Y in the first region 112a, or may not be strictly constant regardless of the position in the second direction Y in the first region 112a. For example, the minimum value of the length of the first region 112a in the first direction X is equal to or more than 95% of the maximum value of the length of the first region 112a in the first direction X. Thus, the length L1 of the first region 112a in the first direction X may be, for example, the average of the lengths of the first region 112a in the first direction X at a plurality of positions in the second direction Y.

The length of the second region 112b in the first direction X may be substantially constant regardless of the position in the second direction Y in the second region 112b, or may not be strictly constant regardless of the position in the second direction Y in the second region 112b. For example, the minimum value of the length of the second region 112b in the first direction X is equal to or more than 95% of the maximum value of the length of the second region 112b in the first direction X. Thus, the length L2 of the second region 112b in the first direction X may be, for example, the average of the lengths of the second region 112b in the first direction X at a plurality of positions in the second direction Y.

The length of the third region 112c in the first direction X may be substantially constant regardless of the position in the second direction Y in the third region 112c, or may not be strictly constant regardless of the position in the second direction Y in the third region 112c. For example, the minimum value of the length of the third region 112c in the first direction X is equal to or more than 95% of the maximum value of the length of the third region 112c in the first direction X. Thus, the length L2 of the third region 112c in the first direction X may be, for example, the average of the lengths of the third region 112c in the first direction X at a plurality of positions in the second direction Y.

The first region 112a includes a fourth region 112d and a fifth region 112e. The positive electrode mixture 120 having a thickness (thickness in the third direction Z) gradually increasing away from the second region 112b and the third region 112c along the first direction X is located over the fourth region 112d. The positive electrode mixture 120 having a substantially constant thickness (thickness in the third direction Z) regardless of the position in the first direction X is located over the fifth region 112e. For example, the minimum value of the thickness of the positive electrode mixture 120 over the fifth region 112e in the third direction Z is equal to or more than 95% of the maximum value of the thickness of the positive electrode mixture 120 over the fifth region 112e in the third direction Z. In the present embodiment, the positive electrode 100 satisfies the following expressions (5) and (6).

$$L3 \leq L4 \quad (5)$$

$$L1 = L4 + L5 \quad (6)$$

Here, L4 is the length of the fourth region 112d of the positive electrode current collector 110 in the first direction X, and L5 is the length of the fifth region 112e of the positive electrode current collector 110 in the first direction X.

The mass ratio of the positive electrode mixture 120 with respect to the total mass of the positive electrode mixture 120 and the mixture 130 over the fourth region 112d is less than the mass ratio of the positive electrode mixture 120 with respect to the total mass of the positive electrode mixture 120 and the mixture 130 over the fifth region 112e (portion of the first region 112a on an opposite side of the second region 112b with respect to the fourth region 112d).

The length of the fourth region 112d in the first direction X may be substantially constant regardless of the position in the second direction Y in the fourth region 112d, or may not be strictly constant regardless of the position in the second direction Y in the fourth region 112d. For example, the minimum value of the length of the fourth region 112d in the first direction X is equal to or more than 95% of the maximum value of the length of the fourth region 112d in the first direction X. Thus, the length L4 of the fourth region 112d in the first direction X may be, for example, the average of the lengths of the fourth region 112d in the first direction X at a plurality of positions in the second direction Y.

The length of the fifth region 112e in the first direction X may be substantially constant regardless of the position in the second direction Y in the fifth region 112e, or may not be strictly constant regardless of the position in the second direction Y in the fifth region 112e. For example, the minimum value of the length of the fifth region 112e in the first direction X is equal to or more than 95% of the maximum value of the length of fifth region 112e in the first direction X. Thus, the length L5 of the fifth region 112e in the first direction X may be, for example, the average of the lengths of the fifth region 112e in the first direction X at a plurality of positions in the second direction Y.

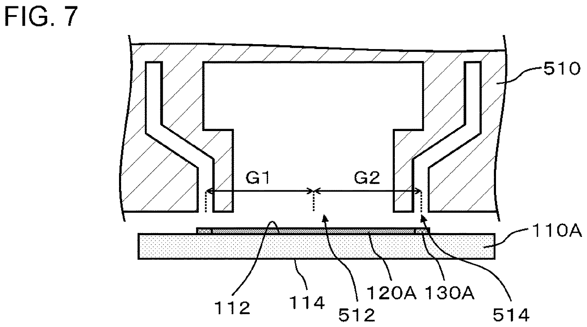

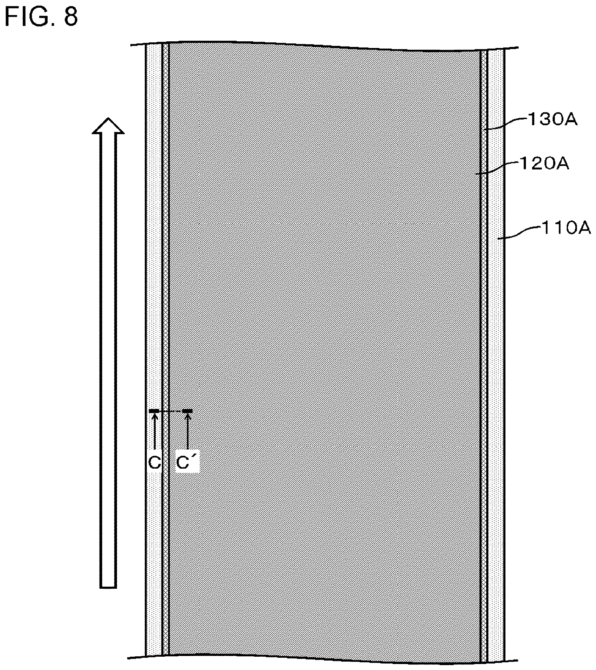

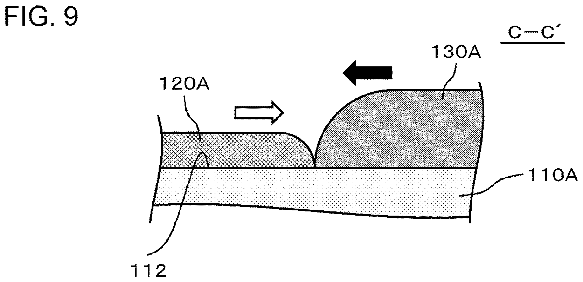

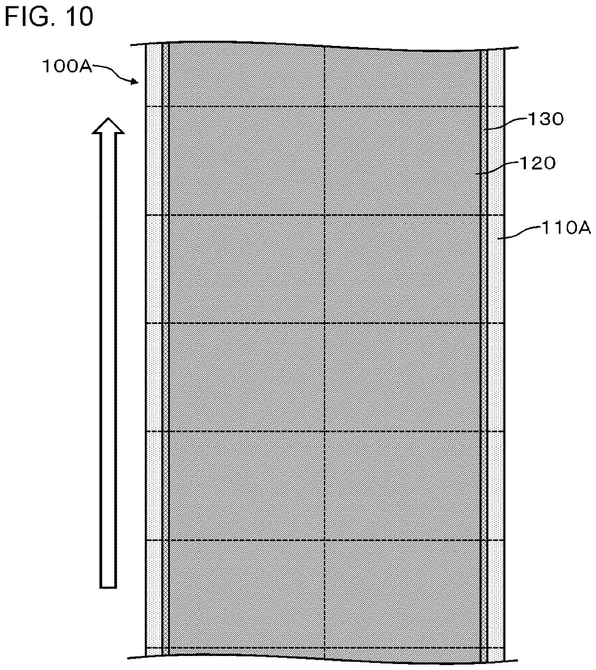

Fig. 6 is a diagram for explaining an apparatus 500 to manufacture a positive electrode sheet 100A. Fig. 7 is a diagram illustrating a tip of a discharge head 510 illustrated in Fig. 6 and the periphery of the tip. Fig. 8 is a plan view of the positive electrode current collector sheet 110A onto which first slurry 120A and second slurry 130A are applied by the discharge head 510 illustrated in Fig. 6. Fig. 9 is a cross-sectional view taken along line C-C' in Fig. 8. Fig. 10 is a plan view of the positive electrode current collector sheet 110A in which the first slurry 120A and the second slurry 130A are dried by a dryer 550 illustrated in Fig. 6 and are formed into the positive electrode mixture 120 and the mixture 130, respectively.

In Figs. 6 and 7, the apparatus 500 includes the discharge head 510, a first tank 522, a first pump 524, a first valve 526, a second tank 532, a second pump 534, a second valve 536, a first transport roller 542, a second transport roller 544, a third transport roller 546, and the dryer 550. The discharge head 510 has a first discharge port 512 and a second discharge port 514.

In Fig. 6, the first transport roller 542, the second transport roller 544, and the third transport roller 546 rotate in directions (clockwise) of arrows attached to the first transport roller 542, the second transport roller 544, and the third transport roller 546. Thus, the positive electrode current collector sheet 110A is fed from the lower side to the upper side from the first transport roller 542 over the second transport roller 544, and is fed from the left side to the right side from the second transport roller 544 over the third transport roller 546.

In Fig. 7, the positive electrode current collector sheet 110A is transported toward the front side or the rear side of the paper surface of Fig. 7 along a direction perpendicular to the paper surface of Fig. 7.

In Figs. 8 and 10, the positive electrode current collector sheet 110A is transported in a direction indicated by the white arrow extending from the lower side to the upper side in each figure.

In Fig. 9, the white arrow extending from the left side to the right side in Fig. 9 indicates a moving direction of the first slurry 120A, and the black arrow extending from the right side to the left side in Fig. 9 indicates a moving direction of the second slurry 130A.

An outline of a method of manufacturing the positive electrode sheet 100A according to the present embodiment is described with reference to Figs. 7 and 9. This method includes a step of applying the first slurry 120A and the second slurry 130A onto the first surface 112 of the positive electrode current collector sheet 110A. The first slurry 120A contains a positive electrode mixture. The second slurry 130A contains a mixture having a composition different from the composition of the positive electrode mixture. As illustrated in Fig. 9, the first slurry 120A and the second slurry 130A are applied onto the first surface 112 such that the first slurry 120A wetting and spreading along the first surface 112 and the second slurry 130A wetting and spreading along the first surface 112 press against each other.

The method further includes a step of drying the first slurry 120A and the second slurry 130A after the first slurry 120A and the second slurry 130A are applied onto the first surface 112 of the positive electrode current collector sheet 110A, and the first slurry 120A wetting and spreading along the first surface 112 and the second slurry 130A wetting and spreading along the first surface 112 are in contact with each other.

According to the method according to the present embodiment, it is possible to manufacture the positive electrode 100 satisfying at least one of the expressions (1) and (2), preferably at least one of the expressions (3) and (4). That is, it is possible to shorten the length L3 (for example, Fig. 5) of the third region 112c of the positive electrode current collector 110 in the first direction X. For example, when one of the first slurry 120A and the second slurry 130A is applied and dried, and then the other of the first slurry 120A and the second slurry 130A is applied and dried, the end portion of the slurry applied later easily covers the end portion of the slurry applied previously. Thus, the length L3 when one of the first slurry 120A and the second slurry 130A is applied and dried and then the other of the first slurry 120A and the second slurry 130A is applied and dried may be longer than the length L3 in the present embodiment. In the present embodiment, on the other hand, the end portion of one of the first slurry 120A and the second slurry 130A are less likely to cover the end portion of the other of the first slurry 120A and the second slurry 130A. Thus, the length L3 in the present embodiment in can be shorter than the length L3 when one of the first slurry 120A and the second slurry 130A is applied and dried and then the other of the first slurry 120A and the second slurry 130A is applied and dried.

Further, according to the method according to the present embodiment, it is possible to simply perform accurate positioning of a boundary between the positive electrode mixture 120 and the mixture 130. For example, when one of the first slurry 120A and the second slurry 130A is applied and dried and then the other of the first slurry 120A and the second slurry 130A is applied and dried, it is not possible to perform accurate positioning between the positive electrode mixture 120 and the mixture 130 unless the wet spread of the slurry applied previously is adjusted accurately. In the present embodiment, on the other hand, the boundary between the positive electrode mixture 120 and the mixture 130 can be set at a position at which the end portion of the first slurry 120A and the end portion of the second slurry 130A press against each other. That is, as compared with the case where one of the first slurry 120A and the second slurry 130A is applied and dried and then the other of the first slurry 120A and the second slurry 130A is applied and dried, in the present embodiment, it is possible to perform accurate positioning of the boundary between the positive electrode mixture 120 and the mixture 130 without accurately adjusting the wet spread of the slurry.

The details of the method according to the present embodiment are described with reference to Figs. 6 to 10.

The first slurry 120A is accommodated in the first tank 522. The second slurry 130A is accommodated in the second tank 532. The first slurry 120A accommodated in the first tank 522 is supplied to the discharge head 510 through the first pump 524 and the first valve 526. The second slurry 130A accommodated in the second tank 532 is supplied to the discharge head 510 through the second pump 534 and the second valve 536.

The first slurry 120A supplied to the discharge head 510 is discharged from the first discharge port 512 of the discharge head 510 toward the first surface 112 of the positive electrode current collector sheet 110A. The pressure of the first slurry 120A discharged to the first surface 112 of the positive electrode current collector sheet 110A is adjusted by, for example, the first pump 524. The flow rate of the first slurry 120A discharged to the first surface 112 of the positive electrode current collector sheet 110A is adjusted by, for example, the first valve 526.

The second slurry 130A supplied to the discharge head 510 is discharged from the second discharge port 514 of the discharge head 510 toward the first surface 112 of the positive electrode current collector sheet 110A. The pressure of the second slurry 130A discharged to the first surface 112 of the positive electrode current collector sheet 110A is adjusted by, for example, the second pump 534. The flow rate of the second slurry 130A discharged to the first surface 112 of the positive electrode current collector sheet 110A is adjusted by, for example, the second valve 536.

In the present embodiment, the first slurry 120A and the second slurry 130A are simultaneously discharged from the first discharge port 512 and the second discharge port 514 of the discharge head 510, respectively. Thus, the first slurry 120A wetting and spreading along the first surface 112 and the second slurry 130A wetting and spreading along the first surface 112 press against each other. Timings at which the first slurry 120A and the second slurry 130A are discharged may be shifted from each other as long as the first slurry 120A wetting and spreading along the first surface 112 and the second slurry 130A wetting and spreading along the first surface 112 press against each other.

In the present embodiment, the first slurry 120A and the second slurry 130A are continuously applied in a direction in which the positive electrode current collector sheet 110A is transported (direction indicated by the white arrow in Figs. 8 and 10). Accordingly, as illustrated in Fig. 8, the first slurry 120A and the second slurry 130A applied to the positive electrode current collector sheet 110A continuously extend in the direction in which the positive electrode current collector sheet 110A is transported (direction indicated by the white arrow in Figs. 8 and 10).

In the present embodiment, two second discharge ports 514 are provided on both sides of the first discharge port 512. Thus, the second slurry 130A is discharged to both sides of the first slurry 120A over the first surface 112 of the positive electrode current collector sheet 110A. More specifically, the two second discharge ports 514 are arranged in a direction (lateral direction in Fig. 7) perpendicular to the direction in which the positive electrode current collector sheet 110A is transported (direction indicated by the white arrow in Figs. 8 and 10). In the direction (lateral direction in Fig. 7) perpendicular to the direction in which the positive electrode current collector sheet 110A is transported (direction indicated by the white arrow in Figs. 8 and 10), each of the second discharge ports 514 is disposed closer to the end side of the positive electrode sheet 100A than the first discharge port 512 is. The number of the second discharge ports 514 may be only one.

Each of a distance G1 between the first discharge port 512 and the second discharge port 514 located on the left side of the first discharge port 512 in Fig. 7, and a distance G2 between the first discharge port 512 and the second discharge port 514 located on the right side of the first discharge port 512 in Fig. 7 is, for example, more than 0 and equal to or less than 4.0 mm. In the present embodiment, the distance G1 is a distance between the center of the first discharge port 512 in a direction (left-right direction in Fig. 7) perpendicular to a transport direction of the positive electrode current collector sheet 110A (direction perpendicular to the paper surface in Fig. 7) and the center of the second discharge port 514 located on the left side of the first discharge port 512 in Fig. 7. The distance G2 is a distance between the center of the first discharge port 512 in the direction (left-right direction in Fig. 7) perpendicular to the transport direction of the positive electrode current collector sheet 110A (direction perpendicular to the paper surface in Fig. 7), and the center of the second discharge port 514 located on the right side of the first discharge port 512 in Fig. 7. From the viewpoint of pressing the first slurry 120A and the second slurry 130A against each other, each of the distances G1 and G2 is preferably equal to or less than a predetermined distance, and may be the above-described range, for example.

The first slurry 120A contains a material to be a positive electrode mixture 120 and a solvent. The solvent contained in the first slurry 120A is, for example, an organic solvent such as N-methyl-2-pyrrolidone (NMP).

The second slurry 130A contains a material to be a mixture 130 and a solvent. The solvent contained in the second slurry 130A is, for example, an organic solvent such as N-methyl-2-pyrrolidone (NMP).

The viscosity of the first slurry 120A and the viscosity of the second slurry 130A may be different from each other from the viewpoint of suppressing the mixing of the first slurry 120A and the second slurry 130A at a portion at which the first slurry 120A and the second slurry 130A press against each other. For example, the viscosity of the first slurry 120A may be higher than the viscosity of the second slurry 130A.

The first slurry 120A and the second slurry 130A are supplied from the discharge head 510 to the positive electrode current collector sheet 110A, and then the positive electrode current collector sheet 110A is fed to the dryer 550. Thus, the first slurry 120A and the second slurry 130A are dried by the dryer 550. The first slurry 120A and the second slurry 130A are formed into the positive electrode mixture 120 and the mixture 130, respectively, by drying the dryer 550 (for example, Fig. 10) .

Then, the positive electrode sheet 100A is divided into a plurality of sheets (positive electrodes 100 (for example, Fig. 4)) along the broken line illustrated in Fig. 10.

The length L1 of the first region 112a, the length L2 of the second region 112b, and the length L3 of the third region 112c is adjustable by adjusting various conditions of the apparatus 500, for example, the width of the first discharge port 512 (the width in the direction (left-right direction of Fig. 7) perpendicular to the transport direction of the positive electrode current collector sheet 110A (direction perpendicular to the paper surface in Fig. 7)), the width of the second discharge port 514 (the width in the direction (left-right direction of Fig. 7) perpendicular to the transport direction of the positive electrode current collector sheet 110A (direction perpendicular to the paper surface in Fig. 7)), the pressure and flow rate of the first slurry 120A discharged to the first surface 112 of the positive electrode current collector sheet 110A, and the pressure and flow rate of the second slurry 130A discharged to the first surface 112 of the positive electrode current collector sheet 110A. For example, a relationship between the width of the first discharge port 512 (the width in the direction (left-right direction of Fig. 7) perpendicular to the transport direction of the positive electrode current collector sheet 110A (direction perpendicular to the paper surface in Fig. 7)) and the width of the second discharge port 514 (the width in the direction (left-right direction of Fig. 7) perpendicular to the transport direction of the positive electrode current collector sheet 110A (direction perpendicular to the paper surface in Fig. 7)), or a relationship between the pressure and flow rate of the first slurry 120A discharged to the first surface 112 of the positive electrode current collector sheet 110A and the pressure and flow rate of the second slurry 130A discharged to the first surface 112 of the positive electrode current collector sheet 110A may be adjustable. More specifically, for example, the amount of the second slurry 130A entering toward the first slurry 120A can be reduced and the length L3 can be reduced by reducing the ratio of the pressure of the second slurry 130A discharged to the first surface 112 of the positive electrode current collector sheet 110A with respect to the pressure of the first slurry 120A discharged to the first surface 112 of the positive electrode current collector sheet 110A. A method of reducing the length L3 is not limited to this example.

EXAMPLES

(Example 1)

A lithium ion secondary battery 10 was manufactured as follows.
A positive electrode 100 was formed as follows. First, the following materials were dispersed in the following solvent to prepare slurry (first slurry 120A).

Positive electrode active material: 97.97 parts by mass of lithium-nickel composite oxide (chemical formula: $LiNi_{0.80}Co_{0.10}Mn_{0.10}O_2$, average particle size of 9 to 13 $\mu$m, and tap density of 2.5 to 3.0 g/cm$^3$)
Conductive aid: 0.5 parts by mass of spheroidal graphite
Binder resin: 1.5 parts by mass of polyvinylidene fluoride (PVDF)
pH adjuster: 0.03 parts by mass of oxalic acid
Solvent: N-methyl-2-pyrrolidone (NMP)

Further, the following materials were dispersed in the following solvent to prepare slurry (second slurry 130A).

Insulating particles: 90 parts by mass of $\alpha$-alumina (average particle size of 0.7 $\mu$m and tap density of 0.8 g/cm$^3$)
Binder: 10 parts by mass of polyvinylidene fluoride (PVDF)
Solvent: N-methyl-2-pyrrolidone (NMP)

Then, using the apparatus 500 described with reference to Figs. 6 and 7, the first slurry 120A and the second slurry 130A were applied onto both surfaces of aluminum foil (positive electrode current collector sheet 110A). As described in the embodiment, the first slurry 120A and the second slurry 130A were discharged such that the first slurry 120A wetting and spreading along the first surface 112 of the positive electrode current collector sheet 110A, and the second slurry 130A wetting and spreading along the first surface 112 of the positive electrode current collector sheet 110A press against each other. Then, the first slurry 120A and the second slurry 130A were dried to form a positive electrode mixture 120 and a mixture 130. Then, the positive electrode sheet 100A was divided to obtain each divided sheet (positive electrode 100). The details of the positive electrode current collector 110 and the positive electrode mixture 120 were as follows.

(Positive Electrode Current Collector 110)

Length (first direction X): 55 mm
Width (second direction Y): 29 mm

Thickness (third direction Z): 12 $\mu$m

(Positive Electrode Mixture 120)

    Density: 3.5 g/cm$^3$
    Thickness (third direction Z) of the positive electrode current collector 110 in the fifth region 112e: 59 $\mu$m (one surface)

(Mixture 130)

Thickness (third direction Z): 20 $\mu$m (one surface) The length L1 (Figs. 4 and 5) of the first region 112a of the positive electrode 100 in the first direction X and the length L3 (Figs. 4 and 5) of the third region 112c of the positive electrode 100 in the first direction X were as shown in Table 1.
A negative electrode 200 was formed as follows. First, the following materials were dispersed in water to prepare slurry.
Negative electrode active material: 77.8 parts by mass of natural graphite (average particle size: 16 $\mu$m) and 19.5 parts by mass of artificial graphite (average particle size: 18 $\mu$m)
Binder resin: 1.7 parts by mass of styrene-butadiene rubber (SBR)
Thickener: 1.0 parts by mass of carboxymethyl cellulose (CMC)
Then, this slurry was applied onto both surfaces (third surface 212 and fourth surface 214) of copper foil (negative electrode current collector sheet), and the slurry was dried to form a negative electrode mixture 220 and obtain a negative electrode sheet. Then, the negative electrode sheet was divided to obtain a divided negative electrode 200. The details of the negative electrode current collector 210 and the negative electrode mixture 220 are as follows.

(Negative Electrode Current Collector 210)

    Length (first direction X): 57 mm
    Width (second direction Y): 31 mm
    Thickness (third direction Z): 6 $\mu$m

(Negative Electrode Mixture 220)

    Density: 1.65 g/cm$^3$
    Thickness (third direction Z): 70.8 $\mu$m (one surface)

A separator 300 was as follows.

(Base Material 310)

Porous resin layer: three-layer resin film of polypropylene/polyethylene/polypropylene

    Length (first direction X): 44 mm
    Width (second direction Y): 33 mm
    Thickness (third direction Z): 16 $\mu$m

(Insulating Layer 320)

Inorganic filler: boehmite
As illustrated in Fig. 3, the stack 12 was formed such that 14 positive electrodes 100 and 14 negative electrodes 200 were alternately arranged, and the separator 300 was disposed between the adjacent positive electrode 100 and the negative electrode 200.
As illustrated in Fig. 1, a lithium ion secondary battery 10 was manufactured by accommodating the stack 12 together with an electrolytic solution in an exterior material 400. The electrolytic solution contains supporting salts, solvents, and additives as follows.

Supporting salt: LiPF$_6$

Solvents: 30% by volume of ethylene carbonate (EC), 60% by volume of diethyl carbonate (DEC), and 10% by volume of methyl ethyl carbonate (MEC)

The discharge capacity (mAh) at each of discharge rates of 0.1 C, 0.2 C, 0.33 C, and 0.5 C was measured for the manufactured lithium ion secondary battery 10. Specifically, the lithium ion secondary battery 10 was charged up to an upper limit voltage of 4.2 V, and constant current discharge was performed at a temperature of 25 °C with a lower limit voltage of 2.5 V for each discharge rate.

A lithium ion secondary battery 10 similar to the lithium ion secondary battery 10 according to Example 1 was produced except that the mixture 130 was not formed over the positive electrode current collector 110. The length in the first direction X of the positive electrode mixture 120 of the lithium ion secondary battery 10 in which the mixture 130 is not formed over the positive electrode current collector 110 is equal to a length L1 + L3 (sum of the lengths) in the first direction X of the first region 112a and the third region 112c of the lithium ion secondary battery 10 according to Example 1. The discharge capacity (mAh) at a discharge rate of 0.1 C was measured for the lithium ion secondary battery 10 in which the mixture 130 was not formed over the positive electrode current collector 110.

The ratio R of the discharge capacity (mAh) at each of the discharge rates of 0.1 C, 0.2 C, 0.33 C, and 0.5 C for the lithium ion secondary battery 10 according to Example 1 with respect to the discharge capacity (mAh) at the discharge rate of 0.1 C for the lithium ion secondary battery 10 in which the mixture 130 was not formed over the positive electrode current collector 110 was as shown in Table 1.

(Examples 2 and 3)

A lithium ion secondary battery 10 according to each of Examples 2 and 3 was similar to the lithium ion secondary battery 10 according to Example 1 except that the length L1 (Figs. 4 and 5) of the first region 112a of the positive electrode 100 in the first direction X and the length L3 (Figs. 4 and 5) of the third region 112c of the positive electrode 100 in the first direction X were as shown in Table 1. The ratio R of the lithium ion secondary battery 10 according to each of Examples 2 and 3 was as shown in Table 1. The ratio of the pressure of the second slurry 130A discharged to the first surface 112 of the positive electrode current collector sheet 110A with respect to the pressure of the first slurry 120A discharged to the first surface 112 of the positive electrode current collector sheet 110A was reduced in the order of Examples 3, 2, and 1.

(Comparative Examples 1 and 2)

A lithium ion secondary battery 10 according to each of Comparative Examples 1 and 2 was similar to the lithium ion secondary battery 10 according to Example 1 except that the length L1 (Figs. 4 and 5) of the first region 112a of the positive electrode 100 in the first direction X and the length L3 (Figs. 4 and 5) of the third region 112c of the positive electrode 100 in the first direction X were as shown in Table 1. The ratio R of the lithium ion secondary battery 10 according to each of Comparative Examples 1 and 2 was as shown in Table 1. In Comparative Examples 1 and 2, the first slurry 120A was applied and dried, and then the second slurry 130A was applied and dried.

[Table 1]

| | L1 + L3 (mm) | L3 (mm) | L3/(L1 + L3) | R (%) | | | |
|---|---|---|---|---|---|---|---|
| | | | | 0.1 C | 0.2 C | 0.33 C | 0.5 C |
| Example 1 | 40 | 0.7 | 0.018 | 99 | 96 | 95 | 93 |
| Example 2 | 40 | 1.3 | 0.033 | 97 | 95 | 94 | 92 |
| Example 3 | 40 | 3.0 | 0.075 | 96 | 93 | 92 | 90 |
| Comparative Example 1 | 40 | 5.0 | 0.125 | 91 | 89 | 88 | 86 |
| Comparative Example 2 | 40 | 7.1 | 0.178 | 89 | 88 | 86 | 84 |

As shown in Table 1, in Examples 1 to 3, the ratio R at each of the discharge rates 0.1 C, 0.2 C, 0.33 C, and 0.5 C was equal to or more than 90%. In Comparative Examples 1 and 2, on the other hand, the ratio R at at least one of the discharge rates of 0.1 C, 0.2 C, 0.33 C, and 0.5 C was less than 90%. From the comparison between Examples 1 to 3 and Comparative Examples 1 and 2, when at least one of the expressions (1) and (2) is satisfied, the reduction in the capacity of the lithium ion secondary battery 10 can be suppressed.

As shown in Table 1, in Examples 1 to 3, the ratio R increases as the length L3 becomes shorter at any of the discharge rates 0.1 C, 0.2 C, 0.33 C, and 0.5 C. Thus, when at least one of the expressions (3) and (4) is satisfied, the reduction in the capacity of the lithium ion secondary battery 10 can be further suppressed.

Although the embodiments and examples of the present invention have been described above with reference to the drawings, these are examples of the present invention, and various configurations other than the above can be adopted.

This application claims priority based on Japanese application Japanese Patent Application No. 2019-218911 filed on December 3, 2019, the disclosure of which is incorporated herein in its entirety.

REFERENCE SIGNS LIST

| 10: | lithium ion secondary battery |
| 12: | stack |
| 100: | positive electrode |
| 100A: | positive electrode sheet |
| 110: | positive electrode current collector |
| 110A: | positive electrode current collector sheet |
| 112: | first surface |
| 112a: | first region |
| 112b: | second region |
| 112c: | third region |
| 112d: | fourth region |
| 112e: | fifth region |
| 114: | second surface |
| 120: | positive electrode mixture |
| 120A: | first slurry |
| 130: | mixture |
| 130A: | second slurry |
| 150: | first lead |
| 200: | negative electrode |
| 210: | negative electrode current collector |
| 212: | third surface |
| 214: | fourth surface |
| 220: | negative electrode mixture |
| 250: | second lead |
| 300: | separator |
| 310: | base material |
| 312: | fifth surface |
| 314: | sixth surface |
| 320: | insulating layer |
| 400: | exterior material |
| 500: | apparatus |
| 510: | discharge head |
| 512: | first discharge port |
| 514: | second discharge port |
| 522: | first tank |
| 524: | first pump |
| 526: | first valve |
| 532: | second tank |
| 534: | second pump |
| 536: | second valve |
| 542: | first transport roller |
| 544: | second transport roller |
| 546: | third transport roller |

550: dryer
X: first direction
Y: second direction
Z: third direction

**Claims**

1. A positive electrode comprising:

   a positive electrode current collector having a first surface;
   a positive electrode mixture located over the first surface of the positive electrode current collector, the positive electrode mixture containing a positive electrode active material; and
   a mixture located over the first surface of the positive electrode current collector, the mixture having a composition different from a composition of the positive electrode mixture, wherein an electron transfer resistance value of the mixture in a thickness direction is higher than an electron transfer resistance value of the positive electrode mixture in the thickness direction,
   wherein the first surface of the positive electrode current collector includes

   a first region over which the positive electrode mixture is present at a ratio of 99 parts by mass or more with respect to 100 parts by mass of total mass of the positive electrode mixture and the mixture, and
   a second region aligned with the first region in one direction along the first surface of the positive electrode current collector, wherein the mixture is present at a ratio of 99 parts by mass or more with respect to 100 parts by mass of the total mass of the positive electrode mixture and the mixture over the second region, and
   the following expression (1) is satisfied.

   $$0 \leq L3/(L1 + L3) \leq 0.075 \quad (1)$$

   Here,
   L1 is a length of the first region of the positive electrode current collector in the one direction, and
   L3 is a length of a third region in the one direction, the third region being located between the first region and the second region of the positive electrode current collector, wherein each of the positive electrode mixture and the mixture is present at a ratio of more than 1.0 part by mass with respect to 100 parts by mass of the total mass of the positive electrode mixture and the mixture over the third region.

2. A positive electrode comprising:

   a positive electrode current collector having a first surface;
   a positive electrode mixture located over the first surface of the positive electrode current collector, the positive electrode mixture containing a positive electrode active material; and
   a mixture located over the first surface of the positive electrode current collector, the mixture having a composition different from a composition of the positive electrode mixture, wherein an electron transfer resistance value of the mixture in a thickness direction is higher than an electron transfer resistance value of the positive electrode mixture in the thickness direction,
   wherein the first surface of the positive electrode current collector includes

   a first region over which the positive electrode mixture is present at a ratio of 99 parts by mass or more with respect to 100 parts by mass of total mass of the positive electrode mixture and the mixture, and
   a second region aligned with the first region in one direction along the first surface of the positive electrode current collector, wherein the mixture is present at a ratio of 99 parts by mass or more with respect to 100 parts by mass of the total mass of the positive electrode mixture and the mixture over the second region, and

   the following expression (2) is satisfied.

   $$0 \leq L3 \leq 3.0 \text{ mm} \quad (2)$$

Here,
L3 is a length of a third region in the one direction, the third region being located between the first region and the second region of the positive electrode current collector, wherein each of the positive electrode mixture and the mixture is present at a ratio of more than 1.0 part by mass with respect to 100 parts by mass of the total mass of the positive electrode mixture and the mixture over the third region.

3. The positive electrode according to claim 1, wherein
the following expression (3) is satisfied

$$0 \leq L3/(L1 + L3) \leq 0.033 \quad (3).$$

4. The positive electrode according to claim 2, wherein the following expression (4) is satisfied

$$0 \leq L3 \leq 1.3 \text{ mm} \quad (4).$$

5. The positive electrode according to any one of claims 1 to 4, wherein

The first region in the first surface of the positive electrode current collector includes a fourth region over which the positive electrode mixture having a thickness gradually increasing away from the second region along the one direction is located, and
the following expression (5) is satisfied.

$$L3 \leq L4 \quad (5)$$

Here,
L4 is a length of the fourth region of the positive electrode current collector in the one direction.

6. The positive electrode according to claim 5, wherein
a mass ratio of the positive electrode mixture with respect to the total mass of the positive electrode mixture and the mixture over the fourth region is less than a mass ratio of the positive electrode mixture with respect to the total mass of the positive electrode mixture and the mixture at a portion of the first region on an opposite side of the second region with respect to the fourth region.

7. The positive electrode according to any one of claims 1 to 6, wherein
the mixture contains at least one selected from the group consisting of aluminum oxide, aluminum hydroxide, magnesium oxide, titanium oxide, zirconium oxide and silicic acid.

8. The positive electrode according to claim 7, wherein
the mixture contains $\alpha$-alumina.

9. A lithium ion secondary battery comprising:
the positive electrode according to any one of claims 1 to 8.

10. A method of manufacturing a positive electrode sheet, the method comprising:

applying a first slurry and a second slurry onto a first surface of a positive electrode current collector sheet, the first slurry containing a positive electrode mixture containing a positive electrode active material, the second slurry containing a mixture having a composition different from a composition of the positive electrode mixture, wherein the first slurry and the second slurry are applied onto the first surface such that the first slurry wetting and spreading along the first surface and the second slurry wetting and spreading along the first surface press against each other.

11. The method of manufacturing a positive electrode sheet according to claim 10, the method further comprising:
drying the first slurry and the second slurry after the first slurry and the second slurry are applied onto the first surface of the positive electrode current collector sheet, and the first slurry wetting and spreading along the first surface and the second slurry wetting and spreading along the first surface are in contact with each other.

**12.** The method of manufacturing a positive electrode sheet according to claim 10 or 11, wherein
the first slurry and the second slurry are continuously applied in a direction in which the positive electrode current collector sheet is transported.

**13.** The method of manufacturing a positive electrode sheet according to any one of claims 10 to 12, wherein
by using a discharge head having a first discharge port and a second discharge port arranged in a direction perpendicular to a direction in which the positive electrode current collector sheet is transported, the first slurry is discharged from the first discharge port and the second slurry is applied from the second discharge port.

**14.** The method of manufacturing a positive electrode sheet according to claim 13, wherein
the second discharge port is disposed closer to an end side of the positive electrode current collector sheet than the first discharge port is, in the direction perpendicular to the direction in which the positive electrode current collector sheet is transported.

**15.** The method of manufacturing a positive electrode sheet according to claim 13 or 14, wherein
a distance between the first discharge port and the second discharge port is more than 0 and equal to or less than 4.0 mm.

**16.** The method of manufacturing a positive electrode sheet according to any one of claims 10 to 15, wherein
viscosity of the first slurry is higher than viscosity of the second slurry.

FIG. 1

10

400

12

150

250

Y

X

FIG. 2

10

12

Y

A

A'

X

FIG. 3

A—A′ (10, 12)

FIG. 4

100

## FIG. 5

B−B′(100)

110
130
120
112
114
112b (L2)
112c (L3)
112d (L4)
112a (L1)
112e (L5)

Z
X

## FIG. 6

500

522(120A)
524
526
510
550
100A(110A)
532(130A)
534
536
544
546
542

FIG. 7

FIG. 8

130A

120A

110A

C C´

FIG. 9

FIG. 10

**INTERNATIONAL SEARCH REPORT**

International application No.

PCT/JP2020/043976

A. CLASSIFICATION OF SUBJECT MATTER
H01M 4/02(2006.01)i; H01M 4/04(2006.01)i; H01M 4/13(2010.01)i; H01M 4/139(2010.01)i
FI: H01M4/13; H01M4/02 Z; H01M4/139; H01M4/04 Z

According to International Patent Classification (IPC) or to both national classification and IPC

B. FIELDS SEARCHED

Minimum documentation searched (classification system followed by classification symbols)
H01M4/02; H01M4/04; H01M4/13; H01M4/139

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-531726 A (LG CHEM, LTD.) 10 December 2012 (2012-12-10) entire text, all drawings | 1–9 |
| A | JP 2015-222657 A (HITACHI AUTOMOTIVE SYSTEMS, LTD.) 10 December 2015 (2015-12-10) entire text, all drawings | 1–9 |
| A | WO 2018/143342 A1 (HITACHI AUTOMOTIVE SYSTEMS, LTD.) 09 August 2018 (2018-08-09) entire text, all drawings | 10–16 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 February 2021 (02.02.2021) | 09 February 2021 (09.02.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

Information on patent family members

International application No.

PCT/JP2020/043976

| Patent Documents referred in the Report | Publication Date | Patent Family | Publication Date |
|---|---|---|---|
| JP 2012-531726 A | 10 Dec. 2012 | US 2013/0216897 A1 entire text, all drawings EP 2500965 A2 KR 10-2012-0034059 A CN 102742050 A PL 2500965 T3 | |
| JP 2015-222657 A | 10 Dec. 2015 | (Family: none) | |
| WO 2018/143342 A1 | 09 Aug. 2018 | US 2019/0374971 A1 entire text, all drawings EP 3578272 A1 CN 110198792 A | |

Form PCT/ISA/210 (patent family annex) (January 2015)

**EP 4 071 844 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012114079 A
- JP 2019218911 A